# FASCICULE DE BREVET EUROPEEN

(11) **EP 3 912 527 B1**
(45) Date de publication et mention de la délivrance du brevet: **01.10.2025**
(21) Numéro de dépôt: 21174558.3
(22) Date de dépôt: 18.05.2021
(51) Int. Cl.: A47J 36/16, A47J 37/06, A47J 43/07

(54) **APPAREIL DE CUISSON COMPRENANT UNE PALE DE BRASSAGE AVEC INJECTION DE VAPEUR**
KOCHGERÄT, DAS EIN RÜHRBLATT MIT DAMPFINJEKTION UMFASST
COOKING APPLIANCE COMPRISING A STIRRING BLADE WITH STEAM INJECTION

(30) Priorité: 19.05.2020 FR 2005051
(43) Date de publication de la demande: 24.11.2021
(73) Titulaire: SEB S.A., 69130 Ecully (FR)
(72) Inventeur: MUGNIER, Cédric, 21120 PICHANGES (FR); PETITALLOT, Johann, 21000 DIJON (FR); SEURAT, Frédéric, 21490 BRETIGNY (FR)
(74) Mandataire: SEB Développement

(56) Documents cités:
- WO-A1-2012/170821
- WO-A1-2019/064319
- CN-U- 210 169 803
- DE-A1- 2 102 062

## Description

### DOMAINE DE L'INVENTION

La présente invention concerne le domaine des appareils de cuisson munis d'une pale de brassage, plus particulièrement pour des appareils de cuisson permettant de réaliser une cuisson vapeur.

### ETAT DE LA TECHNIQUE

Certains appareils de cuisson et de préparation des aliments comprennent une cuve destinée à recevoir les aliments à cuire. Une pale de brassage est montée de manière amovible dans la cuve. La cuve et la pale sont animées d'un mouvement relatif de rotation pendant la cuisson des aliments. La pale est montée à proximité du fond de la cuve, de manière à assurer un brassage des aliments à cuire reçus sur le fond de la cuve.

Une friteuse sans huile à cuisson à air chaud est décrite dans le document EP 1 978 855 B1. La friteuse comprend une pale de brassage et permet une cuisson à air chaud en nécessitant une quantité très faible d'huile de cuisson. De l'air chaud est injecté dans la cuve tandis que les aliments sont brassés par le biais de la pale. Néanmoins, l'appareil ne permet pas de mode de cuisson alternatif, en particulier ne propose pas de mode de cuisson vapeur.

Certains appareils de cuisson proposent des modes de cuisson vapeur. Par exemple, le document WO 2016/062513 et le document WO 2017/178229 décrivent des appareils de cuisson sans brassage, qui proposent de combiner un mode de cuisson à air chaud avec un mode de cuisson vapeur. La vapeur est injectée dans la partie haute de la cuve, au-dessus des aliments à cuire.

Néanmoins, ces appareils ne permettent pas une utilisation performante de la vapeur. En effet, la vapeur étant plus légère que l'air de cuisson, une quantité non négligeable de vapeur est ré-aspirée à travers le haut de la cuve et à travers l'échappement sans être entrée au contact des aliments à cuire, donc sans participer à la cuisson des aliments. Par ailleurs, la cuve doit être remplie et saturée de vapeur avant que la vapeur n'entre en contact avec les aliments pour démarrer leur cuisson. Une durée qui peut être importante peut donc s'écouler entre le début de l'injection de la vapeur et le moment où la cuisson vapeur est effectivement initiée. Enfin, la vapeur entre en contact avec la partie haute des aliments reçus dans la cuve avant d'entrer en contact avec la partie basse des aliments, qui est au contact du fond de la cuve. La vapeur a donc tendance à cuire d'abord la partie haute des aliments, ce qui peut provoquer une cuisson inégale et non homogène des aliments.

Le document CN210169803 décrit un appareil de cuisson adapté pour réaliser une cuisson vapeur, l'appareil comprenant une pale de brassage destinée à être montée en rotation relativement à une cuve d'un appareil de cuisson, la pale comprenant un moyeu et un bras, le moyeu définissant un volume interne de moyeu adapté pour être mis en communication fluidique avec un orifice d'injection de vapeur, et une cuve destinée à recevoir des aliments à cuire, la cuve comprenant un fond, une paroi latérale, et une ouverture opposée au fond, la cuve comprenant un orifice d'injection de vapeur ménagé au travers de son fond et propre à être relié fluidiquement à un système de génération de vapeur, dans lequel la pale est destinée à être montée de manière amovible dans la cuve avec le volume interne de moyeu de la pale en communication fluidique avec l'orifice d'injection de vapeur de la cuve.

Cependant, la vapeur est injectée dans une partie haute du moyeu de la pale et n'est donc pas injectée au plus près des aliments à cuire.

Le document WO2019064319 décrit une pale comprenant un bras comprenant une paroi de bras définissant un volume interne de bras en communication fluidique avec une tuyère d'arrivée de vapeur, et dans laquelle la paroi de bras comprend au moins un orifice traversant adapté pour autoriser un passage de vapeur.

Cependant, cette tuyère d'arrivée de la vapeur est disposée au-dessus du moyeu de la pale ce qui augmente l'encombrement dans la cuve de cuisson.

### EXPOSE DE L'INVENTION

Un but de l'invention est de proposer un appareil de cuisson permettant de proposer une cuisson vapeur présentant une efficacité améliorée en injectant la vapeur au plus près des aliments à cuire sans augmenter l'encombrement dans la cuve de cuisson.

L'invention concerne un appareil de cuisson adapté pour réaliser une cuisson vapeur, l'appareil comprenant :
- une pale de brassage destinée à être montée en rotation relativement à une cuve de l'appareil de cuisson, la pale comprenant un moyeu et un bras, le moyeu définissant un volume interne de moyeu adapté pour être mis en communication fluidique avec un orifice d'injection de vapeur,
- une cuve destinée à recevoir des aliments à cuire, la cuve comprenant un fond, une paroi latérale, et une ouverture opposée au fond, la cuve comprenant un orifice d'injection de vapeur ménagé au travers de son fond et propre à être relié fluidiquement à un système de génération de vapeur,

dans lequel la pale est destinée à être montée de manière amovible dans la cuve avec le volume interne de moyeu de la pale en communication fluidique avec l'orifice d'injection de vapeur de la cuve
le bras comprenant une paroi de bras définissant un volume interne de bras en communication fluidique avec le volume interne de moyeu, dans lequel la paroi de bras comprend au moins un orifice traversant adapté pour autoriser un passage de vapeur caractérisé en ce que l'appareil de cuisson comprend en outre une pièce intermédiaire amovible s'étendant sensiblement coaxialement à un axe de rotation de la pale relativement à la cuve, dans lequel la pièce intermédiaire est destinée à être montée fixe dans le volume interne de moyeu de la pale, la pièce intermédiaire définit un volume interne de pièce intermédiaire adapté pour être relié fluidiquement avec l'orifice d'injection de vapeur, et dans lequel la pièce intermédiaire comprend au moins une lumière traversante adaptée pour autoriser un passage de vapeur depuis le volume interne de pièce intermédiaire vers le volume interne de moyeu de la pale, les lumières traversantes étant des lumières traversantes oblongues s'étendant sensiblement parallèlement à l'axe de rotation R de la pale relativement à la cuve.

Certaines caractéristiques préférées mais non limitatives de l'appareil de cuisson décrit ci-dessus sont les suivantes, prises individuellement ou en combinaison :
- la paroi de bras de la pale de brassage présente une face avant et une face arrière opposées par rapport à un sens de rotation de la pale, et l'au moins un orifice traversant est formé dans la face avant de la paroi de bras et/ou dans la face arrière de la paroi de bras ;
- la paroi de bras de la pale de brassage présente une face avant et une face arrière opposées par rapport à un sens de rotation de la pale, et la paroi de bras présente une forme sensiblement en V inversé, la face avant et la face arrière formant chacune une branche du V inversé ;

- la pale de brassage comprend plusieurs orifices traversants répartis le long de la paroi de bras radialement par rapport au moyeu, et une surface totale des orifices traversants en une position radiale donnée diminue lorsque la distance radiale par rapport au moyeu augmente ;
- la paroi de bras de la pale de brassage présente une face avant et une face arrière opposées par rapport à un sens de rotation de la pale, et la paroi de bras présente en outre une face inférieure joignant la face avant et la face arrière, la face inférieure étant destinée à venir en regard d'un fond de la cuve de l'appareil de cuisson ;
- l'au moins une lumière traversante est ménagée radialement à la pièce intermédiaire ;
- l'appareil de cuisson comprend en outre un châssis adapté pour recevoir la cuve, le châssis comprenant un système de génération de vapeur, de sorte que lorsque la cuve est reçue sur le châssis, alors le système de génération de vapeur est raccordé fluidiquement à l'orifice d'injection de vapeur.

L'invention concerne un procédé de cuisson destiné à être mis en œuvre au moyen d'un appareil de cuisson, comprenant une étape de préchauffage de la cuve jusqu'à une température prédéterminée, et une étape d'injection de vapeur par le système de génération de vapeur une fois la température prédéterminée atteinte ou dépassée.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
[Fig. 1] La figure 1 représente une vue en perspective schématique d'une pale de brassage d'un appareil de cuisson selon un mode de réalisation de l'invention.
[Fig. 2] La figure 2 représente une vue en perspective schématique d'un appareil de cuisson selon un mode de réalisation de l'invention.
[Fig. 3] La figure 3 représente une vue en perspective schématique partielle d'un appareil de cuisson selon un mode de réalisation de l'invention.
[Fig. 4] La figure 4 représente une vue en perspective schématique d'une pièce intermédiaire pour un appareil de cuisson selon un mode de réalisation de l'invention.

Sur l'ensemble des figures, les éléments identiques ou similaires sont désignés par des signes de référence numériques identiques.

### DESCRIPTION DETAILLEE DE L'INVENTION

Un appareil de cuisson adapté pour réaliser une cuisson vapeur comprend une pale de brassage 1 destinée à être montée en rotation relativement à une cuve 2 de l'appareil de cuisson.

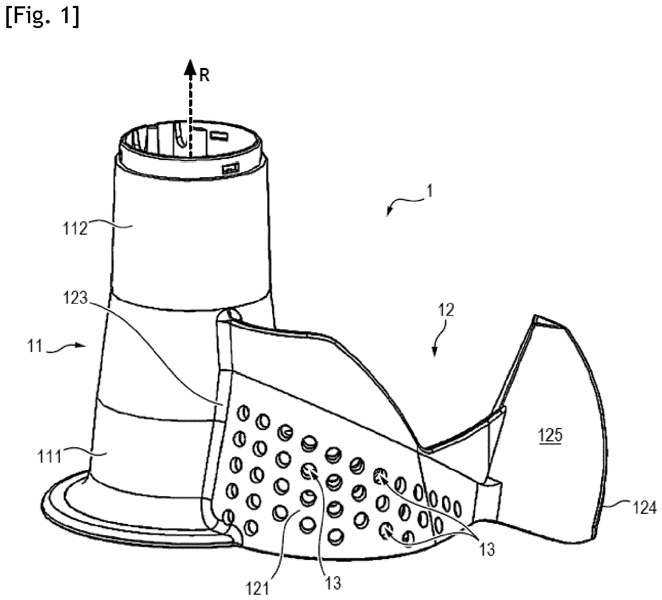

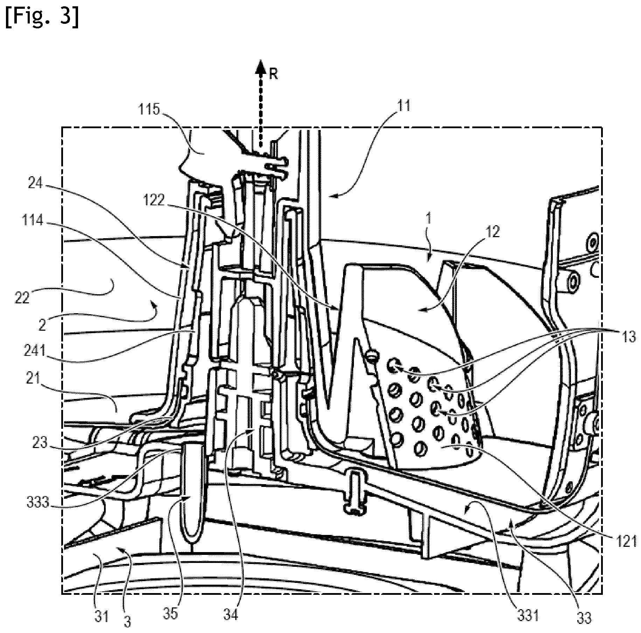

Une telle pale de brassage 1 est illustrée à titre d'exemple non limitatif en figures 1 et 3.

La pale 1 comprend un moyeu 11 et un bras 12. Le moyeu 11 définit un volume interne de moyeu Vm adapté pour être mis en communication fluidique avec un orifice d'injection de vapeur 23. Le bras 12 comprend une paroi de bras 12 définissant un volume interne de bras Vb en communication fluidique avec le volume interne de moyeu Vm.

La paroi de bras 12 comprend au moins un orifice traversant 13 adapté pour autoriser un passage de vapeur.

Dans la suite de la demande, une direction radiale correspond à une direction perpendiculaire à un axe de rotation R de la pale 1 relativement à la cuve 2 et passant par lui. Une dimension d'un élément dans une direction de l'axe de rotation R est appelée hauteur.

Les termes interne / externe sont utilisés en référence à une position radiale par rapport à l'axe de rotation R de la pale 1 relativement à la cuve 2, de sorte que la partie ou la face interne d'un élément est plus proche de l'axe de rotation R que la partie ou la face externe du même élément. Le volume interne de moyeu Vm et le volume interne de bras Vb définissent ensemble un volume interne de pale 1.

Les termes avant et arrière sont définis en relation avec un sens de rotation de la pale 1. Lors de la rotation relative de la pale 1 et de la cuve 2, la face avant 121 de la pale 1 entre en contact avec un aliment à cuire reçu dans la cuve 2 pour provoquer un déplacement de l'aliment.

L'orifice traversant 13 est adapté pour autoriser un passage de vapeur. Par conséquent, l'orifice traversant 13 met en communication fluidique le volume interne de bras Vb de pale 1 et un volume externe par rapport au bras 12 de pale 1, en particulier le volume de la cuve 2 dans laquelle est montée la pale 1 et recevant les aliments à cuire. Ainsi, de la vapeur peut être injectée à travers l'orifice d'injection de vapeur 23 dans le volume interne de moyeu Vm de pale 1, se déplacer jusqu'au volume interne de bras Vb, et passer à travers la pale de brassage 1 par l'orifice traversant 13 de la paroi de bras 12.

La pale de brassage 1 permet de remuer des aliments à cuire reçu dans la cuve 2 de l'appareil de cuisson par le biais de la rotation relative entre la cuve 2 et la pale 1. La pale de brassage 1 permet également une injection de vapeur dans la cuve 2 par le biais de l'au moins un orifice traversant 13. La vapeur est ainsi injectée dans la cuve 2 au niveau de la pale de brassage 1, donc au plus près des aliments à cuire. Ainsi, la cuisson vapeur des aliments est initiée dès le début de l'injection de vapeur par le biais de l'orifice traversant 13. Il n'est donc pas nécessaire d'attendre la saturation en vapeur de la cuve 2 pour démarrer la cuisson vapeur. Ainsi, la cuve 2 permet une cuisson vapeur homogène et rapide de toutes les parties et couches des aliments à cuire.

Par ailleurs, la vapeur étant injectée au niveau de la pale de brassage 1 où s'effectue le brassage des aliments, la vapeur est susceptible d'entrer au contact de chaque partie des aliments à cuire, de manière plus uniforme. La vapeur injectée ne risque pas d'être ré-aspirée et évacuée avant d'être passée à travers les aliments à cuire, mais au contraire remonte à travers les aliments pendant la cuisson. Ainsi, toute la vapeur injectée entre en contact avec les aliments et contribue donc à la cuisson vapeur des aliments. Le contact et l'échange thermique entre la vapeur et les aliments est donc garanti par la pale 1 décrite, et la cuisson vapeur est égale et homogène pour toutes les couches des aliments à cuire.

La pale de brassage 1 peut être installée dans un appareil de cuisson existant, sans perturber le fonctionnement de l'appareil de cuisson existant. La pale de brassage 1 permet à l'appareil de proposer un mode de cuisson vapeur, qui peut être utilisé en combinaison ou en alternative par rapport au(x) mode(s) de cuisson déjà proposé(s) par l'appareil. Par ailleurs, la pale 1 proposée est simple et peu coûteuse à fabriquer.

Le moyeu 11 de la pale 1 peut s'étendre principalement coaxialement à l'axe de rotation R de la pale 1 relativement à la cuve 2, lorsque la pale 1 est montée dans la cuve 2. Le moyeu 11 peut être sensiblement cylindrique autour de l'axe de rotation R, par exemple cylindrique de révolution, par exemple sensiblement tronconique.

Le moyeu 11 de la pale 1 peut présenter une partie basse 111 et une partie haute 112. La partie basse 111 du moyeu 11 de la pale 1 est raccordée au bras 12 de la pale 1. La partie basse 111 du moyeu 11 de la pale 1 peut présenter des dimensions supérieures aux dimensions de la partie haute 112 du moyeu 11 de la pale 1.

Le bras 12 de la pale 1 peut être formé d'une pièce avec le moyeu 11, ou être rapporté et fixé sur le moyeu 11.

La paroi de bras 12 de la pale 1 peut présenter tout profil adapté pour assurer une mise en mouvement des aliments reçus dans la cuve 2 lors de son interaction avec les aliments, en particulier une forme tridimensionnelle. Le bras 12 de la pale 1 peut présenter des formes sensiblement arrondies, de sorte à éviter un broyage des aliments lors de leur brassage.

Le bras 12 de la pale 1 peut s'étendre sensiblement radialement par rapport au moyeu 11 de la pale 1. Le bras 12 de la pale 1 peut présenter une extrémité interne 123 raccordée au moyeu 11 de la pale 1, et une extrémité externe 124 libre. L'extrémité interne 123 de bras 12 peut être raccordée au moyeu 11 de la pale 1 sur toute ou partie de la hauteur de l'extrémité interne 123 du bras 12.

Le bras 12 de la pale 1 peut comprendre des moyens de basculement 125 adaptés pour assurer un basculement des aliments, en particulier un basculement des aliments vers le centre de la cuve 2. Les moyens de basculement 125 peuvent être situés en une position radialement externe du bras 12 de pale 1, par exemple au niveau de son extrémité externe 124, et être adaptés pour autoriser un basculement des aliments au-dessus du bras 12 de la pale 1. Les aliments sont déplacés vers la périphérie de la cuve 2 lors de la rotation relative de la pale 1 et de la cuve 2, jusqu'à entrer en contact des moyens de basculement 125, qui les font alors basculer vers le centre de la cuve 2.

Le bras 12 de pale 1 peut présenter sur toute ou partie du bras 12 une hauteur suffisante pour empêcher les aliments reçus dans la cuve 2 de passer au-dessus du bras 12. Une hauteur du bras 12 de la pale 1 peut diminuer lorsque la distance radiale par rapport au moyeu 11 augmente. Ainsi, le bras 12 de la pale 1 empêche les aliments situés à proximité de l'extrémité interne 123 de la paroi de bras 12 de passer au-dessus de la pale 1, mais autorise les aliments situés à proximité de l'extrémité externe 124 de la paroi de bras 12 de passer au-dessus de la pale 1, en particulier lorsque les aliments sont déplacés par les moyens de basculement 125. L'efficacité du brassage des aliments par la pale 1 en est améliorée.

Une projection du bras 12 de pale 1 dans un plan normal à l'axe de rotation R de la pale 1 relativement à la cuve 2 peut présenter un profil sensiblement courbé, par exemple définissant une forme de volute. En particulier, le profil de la projection du bras 12 de la pale 1 dans le plan normal à l'axe de rotation R peut être courbé vers l'arrière par rapport au sens de rotation de la pale 1 relativement à la cuve 2. L'efficacité et la fluidité du brassage des aliments est ainsi augmentée.

La paroi de bras 12 peut présenter une face avant 121 et une face arrière 122 opposées par rapport à un sens de rotation de la pale 1.

En particulier, la paroi de bras 12 peut présenter un profil coudé. La paroi de bras 12 peut présenter une forme sensiblement en V inversé, la face avant 121 et la face arrière 122 formant chacune une branche du V inversé. La paroi de bras 12 de la pale 1 présente alors un profil triangulaire, la face avant 121 formant un premier côté du triangle et la face arrière 122 formant un deuxième côté du triangle. Un tel profil de paroi de bras 12 de pale 1 en V inversé permet un brassage efficace des aliments.

L'au moins un orifice traversant 13 de la pale 1 constitue un trou de diffusion de vapeur. L'orifice traversant 13 peut être réalisé par perçage circulaire de la pale 1. La fabrication de pale 1 est ainsi particulièrement facile, rapide et peu couteuse. Le moyeu 11 et le bras 12 de la pale 1 peuvent être fabriqués par injection de matière plastique. L'au moins un orifice traversant 13 être fabriqué par perçage ultérieur du bras 12 de la pale 1.

L'au moins un orifice traversant 13 peut être formé dans la face avant 121 de la paroi de bras 12 et/ou dans la face arrière 122 de la paroi de bras 12.

Lorsque l'orifice traversant 13 est disposé au travers de la face avant 121 de la pale 1, la vapeur injectée via l'orifice traversant 13 lors de la rotation relative de la cuve 2 et de la pale 1 entre directement au contact avec les aliments lors du brassage des aliments. La vapeur est injectée directement au contact des aliments à cuire, et pénètre donc directement et de façon efficace dans les aliments, ce qui conduit à une cuisson vapeur efficace dès le début de l'injection de vapeur.

En variante ou en outre, lorsque l'orifice traversant 13 est disposé au travers de la face arrière 122 de la pale 1, la vapeur est injectée via l'orifice traversant 13 dans la cuve 2 et n'entre pas immédiatement en contact avec les aliments à cuire. La cuisson vapeur des aliments est ainsi réalisée plus doucement, de manière indirecte.

La pale 1 peut comprendre plusieurs orifices traversants 13.

Les orifices traversants 13 peuvent être répartis le long de la paroi de bras 12 radialement par rapport au moyeu 11.

Dans un premier exemple de réalisation, une surface totale des orifices traversants 13 en une position radiale donnée diminue lorsque la distance radiale par rapport au moyeu 11 augmente. En d'autres termes, une surface ouverte de passage de vapeur à travers la paroi de bras 12 de pale 1 en une position interne proche de l'axe de rotation R de la pale 1 relativement à la cuve 2, est supérieure à une surface ouverte de passage de vapeur à travers la paroi de bras 12 de pale 1 en une position externe plus éloignée de l'axe de rotation R. Ainsi, davantage de vapeur est injectée en une position radialement interne par rapport au moyeu 11 de la pale 1 qu'en une position radialement externe.

Les orifices traversants 13 peuvent présenter un diamètre sensiblement identique et être répartis de manière sensiblement homogène sur toute la surface de la paroi de bras 12 de pale 1, la pale 1 présentant alors une hauteur qui diminue lorsque la distance radiale augmente. Ainsi, le nombre d'orifices traversants 13 du bras 12 de pale 1 est plus faible en une position externe qu'en une position interne du bras 12 de pale 1.

En variante, les orifices traversants 13 peuvent être présents en un nombre constant quelle que soit la position radiale, mais présenter un diamètre qui diminue lorsque la distance radiale augmente.

Dans un deuxième exemple de réalisation, une surface totale des orifices traversants 13 en une position radiale donnée le long du bras 12 de pale 1 est constante quelle que soit la distance radiale par rapport au moyeu 11. Ainsi, la quantité de vapeur injectée ne dépend pas de la position radiale par rapport au moyeu 11 de la pale 1.

La paroi de bras 12 de la pale 1 peut présenter en outre une face inférieure joignant la face avant 121 et la face arrière 122, la face inférieure étant destinée à venir en regard d'un fond 21 de la cuve 2 de l'appareil de cuisson. Le volume interne de bras Vb est délimité par la face avant 121, la face arrière 122 et la face inférieure du bras 12 de la pale 1. Dans le cas d'une paroi de bras 12 en forme en V inversé, la face inférieure forme un troisième côté du triangle.

La cuve 2 peut comprendre une poignée 27 adaptée pour faciliter sa manipulation par un utilisateur, en particulier sa mise en place et son retrait dans l'appareil de cuisson.

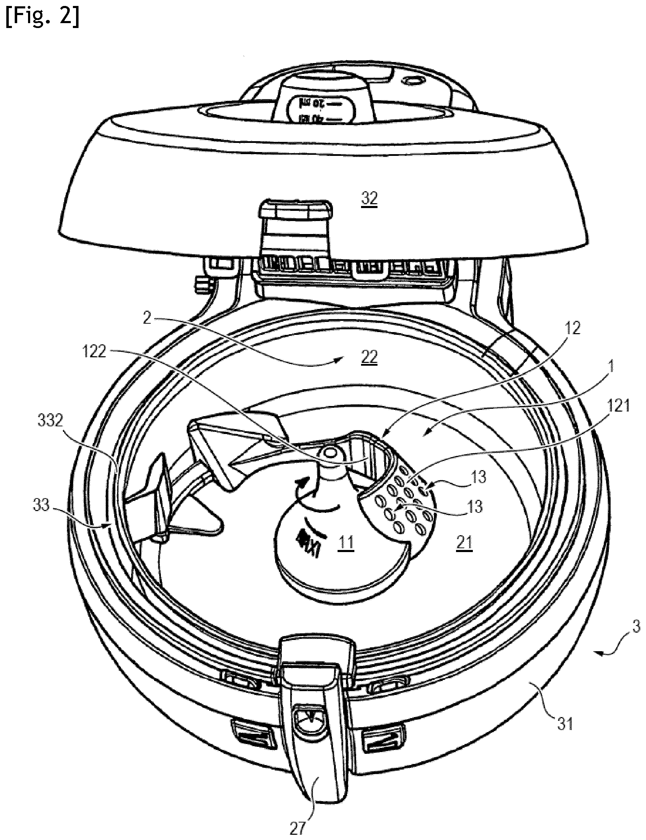

L'appareil de cuisson adapté pour réaliser une cuisson vapeur est illustré à titre d'exemple non limitatif en figures 2 et 3. L'appareil de cuisson comprend la pale de brassage 1 telle que décrite ci-dessus, et la cuve 2 destinée à recevoir des aliments à cuire.

La pale de brassage 1 et la cuve 2 sont adaptées pour être montées mobiles en rotation l'une par rapport à l'autre selon l'axe de rotation R de la pale 1 relativement à la cuve 2. La pale 1 peut être entraînée en rotation dans la cuve 2 fixe. En variante, la pale 1 peut être fixe et la cuve 2 tourner autour de la pale 1. En variante, la pale 1 et la cuve 2 peuvent être mobiles en rotation autour de l'axe de rotation R, la pale 1 et la cuve 2 présentant des vitesses de rotation différentes et/ou des sens de rotation opposés.

La cuve 2 comprend un fond 21, une paroi latérale 22, et une ouverture opposée au fond 21. La cuve 2 comprend un orifice d'injection de vapeur 23 ménagé au travers de son fond 21 et propre à être relié fluidiquement à un système de génération de vapeur.

La pale 1 est destinée à être montée de manière amovible dans la cuve 2 avec le volume interne de moyeu Vm de pale 1 en communication fluidique avec l'orifice d'injection de vapeur 23 de la cuve 2. La pale 1 peut ainsi être séparée de la cuve 2, par exemple de sorte à laver la pale 1 et la cuve 2 de manière indépendante, ou à remplacer la pale 1 ou la cuve 2. Par exemple, la pale 1 peut être montée de manière amovible dans la cuve 2 par clipsage de la pale 1 dans la cuve 2.

Un volume interne de cuve 2 est délimité par le fond 21 de la cuve 2, la paroi latérale 22 de la cuve 2, et l'ouverture de la cuve 2. Le volume interne de cuve 2 comprend le volume interne de pale 1 et un volume de réception des aliments à cuire. Le volume de réception des aliments à cuire est situé en une position externe par rapport au volume interne de pale 1. Le volume de réception des aliments à cuire combiné au volume interne de pale 1 correspond au volume interne de cuve 2.

Le fond 21 de la cuve 2 est situé en une position basse de la cuve 2, et l'ouverture de la cuve 2 est située en une position haute de la cuve 2. Les aliments à cuire sont destinés à être insérés à travers l'ouverture de cuve 2 pour être disposés sur le fond 21 de la cuve 2, c'est-à-dire dans la partie basse 111 de la cuve 2. La cuve 2 peut en outre accueillir un moyen de cuisson tel que de l'eau, et/ou une matière grasse, telle que de l'huile, du beurre ou de la graisse.

La cuve 2 peut être sensiblement symétrique autour d'un axe de symétrie. L'axe de symétrie de la cuve 2 peut correspondre à l'axe de rotation R de la pale 1 relativement à la cuve 2.

La paroi latérale 22 de la cuve 2 peut s'étendre sensiblement orthogonalement au fond 21 de la cuve 2. La paroi latérale 22 peut présenter une forme de cylindre de révolution. Une génératrice du cylindre peut s'étendre selon la direction de la hauteur de la cuve 2, et peut en particulier correspondre à l'axe de rotation R de la pale 1 relativement à la cuve 2.

Le fond 21 de la cuve 2 peut être sensiblement plan. Une hauteur correspond à une direction orthogonale au plan du fond 21 de la cuve 2. L'axe de rotation R peut être sensiblement perpendiculaire au plan formé par le fond 21 de la cuve 2, et s'étendre sensiblement depuis un centre du fond 21 de la cuve 2. Le fond 21 de la cuve 2 peut être sensiblement en forme de disque, un rayon du disque de fond 21 correspondant sensiblement à un rayon du cylindre de révolution de la paroi latérale 22.

La paroi latérale 22 et le fond 21 de la cuve 2 peuvent être formés d'une seule pièce ou être rapportés et fixés l'un sur l'autre. La paroi latérale 22 peut présenter une extrémité basse raccordée au fond 21 de la cuve 2, et une extrémité haute libre délimitant l'ouverture de la cuve 2.

Le fond 21 de la cuve 2 peut être plein au niveau de la partie du fond 21 susceptible d'être au contact des aliments à cuire, de sorte à ne pas laisser s'échapper les aliments et le cas échéant le moyen de cuisson et/ou la matière grasse. En d'autres termes, lorsque la pale 1 est montée dans la cuve 2 et lors de la rotation relative de la pale 1 et de la cuve 2, la partie du fond 21 qui est située au niveau du volume de réception des aliments à cuire est pleine.

La pale 1 peut être montée dans la cuve 2 de sorte à être disposée à proximité du fond 21 de la cuve 2, voire à reposer sur le fond 21 de la cuve 2. La pale de brassage 1 peut être disposée au contact du fond 21 de la cuve 2. La partie basse 111 du moyeu 11 de pale 1 et le bras 12 de pale 1 sont destinés à s'étendre à proximité du fond 21 de la cuve 2 lorsque la pale 1 est montée dans la cuve 2. Le cas échant, la face inférieure du bras 12 de la pale 1 est disposée à proximité du fond 21 de la cuve 2, voire repose au contact du fond 21 de la cuve 2.

Ainsi, la pale 1 est située dans la partie basse 111 de la cuve 2. La vapeur est donc injectée dans la partie basse 111 de la cuve 2, c'est-à-dire à proximité des aliments à cuire, voire sous les aliments à cuire. La vapeur traverse les aliments à cuire avant d'être évacuée par l'ouverture de la cuve 2. La cuisson vapeur résultante est donc homogène et efficace.

L'orifice d'injection de vapeur 23 peut être disposé à proximité du centre du fond 21 de la cuve 2, en une position radialement interne, de sorte que lors de la rotation relative de la pale 1 et de la cuve 2, l'orifice d'injection de vapeur 23 débouche dans le volume interne de pale 1 et ne débouche pas dans le volume de réception d'aliments à cuire. En particulier, l'orifice d'injection de vapeur 23 peut déboucher dans le volume interne de moyeu Vm de la pale 1.

La cuve 2 peut comprendre un orifice de mise en place ménagé au travers de son fond 21. L'orifice de mise en place permet une mise en place de la cuve 2 dans l'appareil de cuisson.

L'orifice de mise en place peut être disposé à proximité du centre du fond 21 de la cuve 2, en une position radialement interne, de sorte que lors de la rotation relative de la pale 1 et de la cuve 2, l'orifice de mise en place débouche dans le volume interne de pale 1 et ne débouche pas dans le volume de réception des aliments à cuire. En particulier, l'orifice de mise en place peut déboucher dans le volume interne de moyeu Vm de la pale 1. En particulier, l'orifice de mise en place peut être ménagé sensiblement au centre du fond 21 de la cuve 2.

L'orifice d'injection de vapeur 23 peut coïncider avec l'orifice de mise en place. Le fond 21 de la cuve 2 comprend alors un seul orifice central, formant à la fois un orifice d'injection de vapeur 23 et un orifice de mise en place. En variante, l'orifice d'injection de vapeur 23 peut être formé dans le fond 21 de la cuve 2 en une position radialement externe par rapport à l'orifice de mise en place.

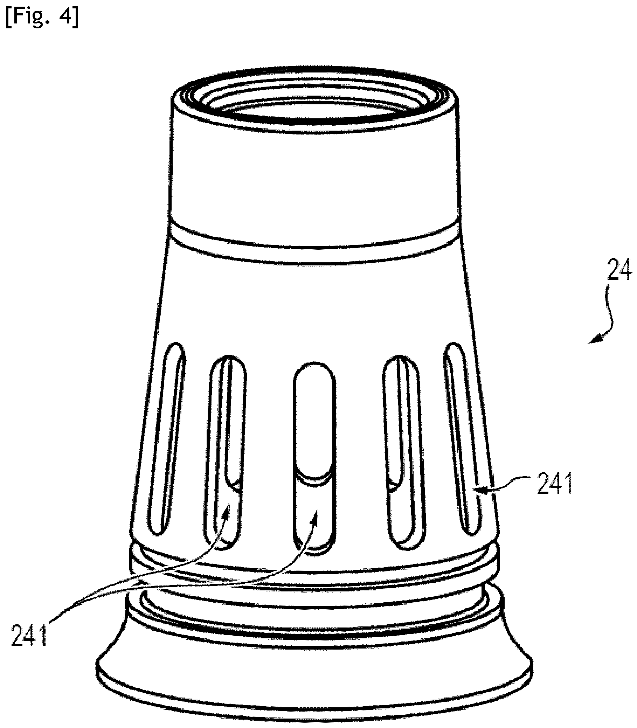

L'appareil de cuisson peut comprendre en outre une pièce intermédiaire 24 amovible s'étendant sensiblement coaxialement à l'axe de rotation R. Un exemple de pièce 24 est illustré en figure 4. La pièce intermédiaire 24 peut être destinée à être montée dans le volume interne de moyeu Vm de la pale 1.

La pièce intermédiaire 24 est montée solidaire de la cuve 2 en rotation, en particulier peut être rapportée et fixée sur une partie interne du fond 21 de la cuve 2. La pièce intermédiaire 24 permet de guider une rotation relative de la pale 1 par rapport à la cuve 2, et de diminuer les frottements associés à cette rotation. La pièce intermédiaire 24 permet en outre de découpler la rotation de la pale 1 de la rotation de la cuve 2.

En particulier, la pièce intermédiaire 24 peut être solidaire de la cuve 2 fixe, tandis que la pale de brassage 1 est mobile en rotation dans la cuve 2 fixe.

La pièce intermédiaire 24 s'étend sensiblement coaxialement à l'axe de rotation R de la pale 1 relativement à la cuve 2 lorsque la pièce intermédiaire 24 est montée dans la cuve 2. La pièce intermédiaire 24 peut présenter une symétrie de révolution autour de l'axe de rotation R, et en particulier être sensiblement tronconique.

Le moyeu 11 de la pale 1, en particulier la partie basse 111 du moyeu 11, peut s'étendre autour de la pièce intermédiaire 24, coaxialement à la pièce intermédiaire 24. Le moyeu 11 de la pale 1 est donc situé en une position plus externe que la pièce intermédiaire 24.

Plus particulièrement, le moyeu 11 de la pale 1, en particulier la partie basse 111 du moyeu 11, peut comprendre un appendice interne 113 et un appendice externe 114. L'appendice externe 114 du moyeu 11 de la pale 1 définit le volume interne de moyeu Vm et est situé en une position plus externe que la pièce intermédiaire 24. L'appendice interne 113 du moyeu 11 est situé en une position plus interne que la pièce intermédiaire 24. La pièce intermédiaire 24 s'étend donc entre l'appendice interne 113 et l'appendice externe 114 du moyeu 11 de la pale 1 lorsque la pale 1 est montée dans la cuve 2.

Le moyeu 11 peut en outre comprendre un organe de verrouillage 115 et la pièce intermédiaire 24 comprendre un rebord haut. L'organe de verrouillage 115 et le rebord haut de la pièce intermédiaire 24 sont adaptés pour coopérer lors d'une translation de la pale 1 le long de l'axe de rotation R, la pale 1 étant mise en place autour de la pièce intermédiaire 24, de sorte à assurer un verrouillage du moyeu 11 de la pale 1 sur la pièce intermédiaire 24. Ainsi, le moyeu 11 de la pale 1 est clipsé de manière réversible sur à la pièce intermédiaire 24.

La pièce intermédiaire 24 définit un volume interne de pièce intermédiaire 24 adapté pour être relié fluidiquement avec l'orifice d'injection de vapeur 23. En particulier, l'orifice d'injection de vapeur 23 peut déboucher dans le volume interne de pièce intermédiaire 24.

La pièce intermédiaire 24 comprend au moins une lumière traversante 241 adaptée pour autoriser un passage de vapeur depuis le volume interne de pièce intermédiaire 24 vers le volume interne de moyeu Vm de pale 1. Ainsi, la vapeur est injectée dans le volume interne de pièce intermédiaire 24 via l'orifice d'injection de vapeur 23, et traverse la lumière traversante 241 de la pièce intermédiaire 24 pour déboucher dans le volume interne de moyeu Vm, plus particulièrement entre la pièce intermédiaire 24 et l'appendice externe 114 du moyeu 11.

La pièce intermédiaire 24 peut comprendre une pluralité de lumières traversantes 241. Les lumières traversantes 241 sont ménagées radialement à la pièce intermédiaire 24. Les lumières traversantes 241 peuvent être des lumières traversantes 241 oblongues s'étendant sensiblement parallèlement à l'axe de rotation R de la pale 1 relativement à la cuve 2. Les lumières traversantes 241 peuvent être circonférentiellement réparties autour de la pièce intermédiaire 24, afin d'assurer une répartition homogène de la vapeur qui traverse ces lumières traversantes 241, dans le volume interne de moyeu Vm de la pale 1 entre la pièce intermédiaire 24 et l'appendice externe 114 du moyeu 11.

L'appareil de cuisson peut comprendre en outre un châssis 3. La cuve 2 peut être mise en place de manière amovible dans le châssis 3.

Le châssis 3 peut comprendre un socle 31 et un couvercle 32. Le socle 31 du châssis 3 peut être situé en une position plus basse que le couvercle 32 du châssis 3.

Le socle 31 du châssis 3 peut présenter un renfoncement 33 de dimensions et de forme sensiblement complémentaires des dimensions et de la forme de la cuve 2, de sorte que la cuve 2 peut être mise en place de manière amovible dans le renfoncement 33 du châssis 3.

La cuve 2 peut être mise en place dans le châssis 3 par une translation de la cuve 2 vers le bas le long de l'axe de rotation R, le châssis 3 étant fixe. La cuve 2 peut être retirée du châssis 3 par une translation de la cuve 2 vers le haut le long de l'axe de rotation R, le châssis 3 étant fixe.

En particulier, le renfoncement 33 du châssis 3 peut présenter un fond 331, une paroi latérale 332 et une ouverture de renfoncement 33, de forme et de dimensions correspondant sensiblement à celles du fond 21, de la paroi latérale 22 et de l'ouverture de la cuve 2. Le fond 331 du renfoncement 33 du châssis 3 peut comprendre un orifice de renfoncement 333 adapté pour être mis en communication fluidique avec l'orifice d'injection de vapeur 23 de la cuve 2. L'orifice de renfoncement 333 formé dans le fond 331 du renfoncement 33 peut être agencé de sorte à être disposé en regard de l'orifice d'injection de vapeur 23 de la cuve 2 lorsque la cuve 2 est mise en place dans le renfoncement 33.

Lorsque la cuve 2 est mise en place dans le renfoncement 33 du châssis 3, le fond 21 de la cuve 2 est en contact avec le fond 331 du renfoncement 33, et la paroi latérale 22 de la cuve 2 est en contact avec la paroi latérale 332 du renfoncement 33 du châssis 3.

Le couvercle 32 du châssis 3 est monté mobile entre une position d'ouverture et une position de fermeture.

Lorsque la cuve 2 est mise en place dans le renfoncement 33 du socle 31 et que le couvercle 32 est dans la position d'ouverture, la cuve 2 peut être mise en place dans le châssis 3 ou retirée du châssis 3. Par ailleurs des aliments à cuire peuvent être introduits dans la cuve 2 via l'ouverture de la cuve 2.

Lorsque la cuve 2 est mise en place sur le socle 31 et que le couvercle 32 est dans la position de fermeture, le couvercle 32 forme avec le socle 31 une enceinte fermée de sorte à autoriser une cuisson en atmosphère fermée des aliments reçus dans la cuve 2. Le couvercle 32 présente dans un plan normal à l'axe de rotation R des dimensions sensiblement complémentaires des dimensions de l'ouverture du renfoncement 33 du châssis 3.

Le châssis 3 peut comprendre un arbre de guidage 34 en rotation de la cuve 2 et/ou de la pale 1. L'arbre de guidage 34 peut être disposé sensiblement au niveau d'un centre du châssis 3, en particulier au niveau d'un centre du fond 331 du renfoncement 33 du châssis 3, et s'étendre sensiblement coaxialement à l'axe de rotation R de la pale 1 relativement à la cuve 2.

L'arbre de guidage 34 peut présenter des dimensions correspondant sensiblement aux dimensions de l'orifice de mise en place, de sorte que l'arbre de guidage 34 s'étend au travers de l'orifice de mise en place lorsque la cuve 2 est mise en place sur le châssis 3.

La pièce intermédiaire 24 permet de raccorder le moyeu 11 de la pale 1 avec l'arbre de guidage 34. La pièce intermédiaire 24 est disposée entre l'arbre de guidage 34 et le moyeu 11 de la pale 1, sensiblement coaxialement avec eux.

Le châssis 3 peut comprendre un système de génération de vapeur. Le châssis 3 est prévu pour recevoir la cuve 2 de manière amovible de sorte que lorsque la cuve 2 est reçue dans le châssis 3, l'orifice d'injection de vapeur 23 de la cuve 2 est en communication fluidique avec le système de génération de vapeur. Ainsi, la vapeur générée par le système de génération de vapeur est amenée jusqu'à l'orifice d'injection de vapeur 23 de la cuve 2 avant de passer au travers de l'au moins un orifice traversant 13 de la pale de brassage 1.

En particulier, le système de génération de vapeur peut être intégré dans le socle 31 du châssis 3 de l'appareil de cuisson, sous le renfoncement 33 du châssis 3, donc sous la cuve 2 lorsque celle-ci est mise en place dans le renfoncement 33 du châssis 3. Le système de génération de vapeur est adapté pour injecter la vapeur à travers l'orifice d'injection de vapeur 23 du fond 21 de la cuve 2.

Le châssis 3 peut comprendre en outre un réservoir à eau permettant d'alimenter en eau le système de génération de vapeur.

L'appareil de cuisson, en particulier le châssis 3, peut comprendre en outre un canal de circulation de vapeur 35 adapté pour raccorder une sortie de système de génération de vapeur avec l'orifice d'injection de vapeur 23 lorsque la cuve 2 est posée sur le socle 31.

Ainsi, la vapeur générée par le système de génération de vapeur circule dans le canal de circulation de vapeur 35, puis passe à travers l'orifice d'injection de vapeur 23, pour déboucher dans le volume interne de bras Vb de pale 1.

En particulier, le canal de circulation de vapeur 35 peut comprendre une première extrémité raccordée au système de génération de vapeur, et une deuxième extrémité coïncidant avec l'orifice de renfoncement 333. Ainsi, la vapeur générée circule dans le canal de circulation de vapeur 35 depuis sa première extrémité vers sa deuxième extrémité, débouche de l'orifice de renfoncement 333 du châssis 3, puis passe au travers de l'orifice d'injection de vapeur 23 de la cuve 2.

Le châssis 3 peut comprendre en outre un système d'étanchéité, tel qu'un joint d'étanchéité, adapté pour raccorder de manière étanche le système de génération de vapeur et le canal de circulation de vapeur 35. Ainsi, les pertes de la vapeur générée par le raccord entre le système de génération de vapeur et l'orifice d'injection de vapeur 23 sont minimisées, ce qui permet d'améliorer l'efficacité de la cuisson vapeur.

Le châssis 3, en particulier le socle 31, peut comprendre un arbre de guidage 34.

L'arbre de guidage 34 peut s'étendre principalement coaxialement à l'axe de rotation R, et peut être disposé sensiblement au centre du châssis 3, en particulier sensiblement au centre du fond 331 du renfoncement 33 du socle 31 du châssis 3. L'arbre de guidage 34 peut s'étendre en saillie dans le renfoncement 33 du châssis 3, à travers l'orifice de renfoncement 333 du socle fond 331 du renfoncement 33.

L'arbre de guidage 34 est mobile en rotation autour de l'axe de rotation R de la pale 1 relativement à la cuve 2. Le châssis 3, en particulier le socle 31 du châssis 3, peut comprendre des moyens d'entraînement en rotation de l'arbre de guidage 34, tel qu'un moteur électrique. Les moyens d'entraînement en rotation de l'arbre de guidage 34 sont adaptés pour entraîner en rotation l'arbre de guidage 34.

L'arbre de guidage 34 guide la mise en place de la cuve 2 sur le châssis 3. En particulier, lors d'une translation de la cuve 2 le long de l'axe de rotation R dans le renfoncement 33 du châssis 3, l'orifice de mise en place de la cuve 2 est mis en place autour de l'arbre de guidage 34. L'arbre de guidage 34 s'étend donc en saillie dans le volume interne de la cuve 2 lorsque la cuve 2 est mise en place dans le renfoncement 33 du châssis 3.

En particulier, le moyeu 11 de la pale 1 peut être encastré sur l'arbre de guidage 34 lorsque la pale 1 est montée dans la cuve 2 et que la cuve 2 est mise en place dans le châssis 3. Le moyeu 11 de la pale 1 est mis en place autour de l'arbre de guidage 34, en une position externe par rapport à l'arbre de guidage 34. L'arbre de guidage 34 et le moyeu 11 de la pale 1 peuvent être en contact l'un de l'autre au niveau d'un ou de plusieurs points de contact adaptés pour assurer une mise en place et une fixation amovible du moyeu 11 de la pale 1 sur l'arbre de guidage 34.

La pale 1 peut être solidaire en rotation autour de l'axe de rotation R de l'arbre de guidage 34. Ainsi, lorsque l'arbre de guidage 34 est entraîné en rotation, la pale 1 est entraînée en rotation par l'arbre de guidage 34, tandis que la cuve 2 reste immobile. Le brassage des aliments reçus dans la cuve 2 est ainsi assuré lors de leur cuisson.

L'appareil de cuisson comporte en outre des moyens de préchauffage de la cuve 2 adaptés pour préchauffer la cuve 2 jusqu'à une température prédéterminée. Par exemple, la température prédéterminée peut correspondre sensiblement à une température d'ébullition de l'eau. Ainsi, la cuisson vapeur est initiée dès le début de la génération de vapeur, sans condensation de la vapeur lors de sa circulation dans le canal de circulation de vapeur 35 et de son injection dans la cuve 2. L'efficacité de la cuisson vapeur est donc améliorée.

L'appareil de cuisson peut comporter en outre des moyens de cuisson additionnels. En particulier, les moyens de cuisson peuvent être intégrés dans le socle 31 du châssis 3 de l'appareil de cuisson. Les moyens de cuisson additionnels peuvent être des moyens de cuisson à air chaud et/ou des moyens de cuisson sous pression, et/ou des moyens de cuisson par mijotage.

Les moyens de cuisson additionnels peuvent être utilisés indépendamment des moyens de cuisson vapeur décrits ci-dessus, par exemple simultanément avec les moyens de cuisson vapeur, ou successivement à ceux-ci.

Ainsi, l'appareil de cuisson permet de proposer un mode de cuisson vapeur, en plus ou en combinaison avec d'autres modes de cuisson potentiels, tels qu'un mode de cuisson tel qu'une cuisson à air chaud et/ou une cuisson sous pression, ou encore une cuisson par mijotage.

Ainsi, l'appareil de cuisson permet d'optimiser l'utilisation d'un ou plusieurs moyens de cuisson des aliments, de manière successive ou simultanée, et ainsi d'optimiser la cuisson des aliments.

Le châssis 3 peut comprendre une interface de commande de cuisson adaptée pour contrôler les moyens de cuisson vapeur et le cas échéant les moyens de cuisson additionnels. L'interface de commande peut être disposée sur le châssis 3, de sorte à être visible et contrôlable par un utilisateur de l'appareil de cuisson. L'interface de commande peut comprendre un moyen, par exemple un bouton, de commande d'un démarrage et/ou d'un arrêt de la cuisson vapeur et/ou du ou des moyens de cuisson additionnels.

L'interface de commande peut, en alternative ou en outre, être conçue pour permettre à l'utilisateur de programmer et/ou de préprogrammer un cycle de cuisson comprenant une ou plusieurs étapes de cuisson correspondant à un ou plusieurs moyens de cuisson différents, les étapes étant réalisées de manière successive ou simultanée. Ainsi, l'utilisateur peut définir la cuisson la plus adaptée aux aliments reçus dans l'enceinte.

### Procédé de cuisson

Le fonctionnement des variantes de réalisation illustrées aux figures 1 à 4 va maintenant être décrit de manière détaillée.

Le procédé de cuisson comprend une étape de préchauffage de la cuve 2 jusqu'à une température prédéterminée, et une étape d'injection de vapeur par le système de génération de vapeur une fois la température prédéterminée atteinte ou dépassée.

Les moyens de préchauffage assurent le préchauffage de la cuve 2 à la température prédéterminée, afin de limiter, voire d'éliminer, la condensation de la vapeur lors de la cuisson vapeur. L'étape de préchauffage peut être réalisée par un cycle de préchauffage, par le biais d'une étape de cuisson à air chaud. L'étape de préchauffage permet d'améliorer l'efficacité de l'étape de cuisson vapeur ultérieure.

Lors de l'étape d'injection de vapeur, la vapeur générée par le système de génération de vapeur est injectée par l'orifice d'injection de vapeur 23 dans le volume interne de moyeu Vm, puis passe dans le volume interne de bras Vb, et enfin passe à travers l'orifice traversant 13 de la paroi de bras 12, afin de déboucher dans la cuve 2 contenant les aliments à cuire.

La vapeur peut être diffusée vers les aliments à travers un orifice traversant 13 formé dans la face avant 121 et/ou dans la face arrière 122 du bras 12 de pale 1. La vapeur remonte alors au travers les aliments à cuire vers l'orifice de la cuve 2. Ainsi, une cuisson vapeur des aliments est réalisée lors de cette étape.

Dans un exemple particulier de réalisation, la vapeur est générée sous la cuve 2 par le système de génération de vapeur. La vapeur circule dans le canal de circulation de vapeur 35 jusqu'à l'orifice de renfoncement 333 du socle 31 du châssis 3. La vapeur débouche alors dans le volume interne de la pièce intermédiaire 24 à travers l'orifice d'injection de vapeur 23 de la cuve 2. La vapeur traverse les lumières traversantes 241 de la pièce intermédiaire 24, puis se déplace jusqu'au volume interne de bras Vb de la pale 1, pour ensuite passer au travers des orifices traversants 13 de pale 1. La vapeur est ainsi injectée dans le volume de réception des aliments à cuire de la cuve 2.

Le procédé de cuisson peut comprendre une étape de cuisson additionnelle, en plus de l'étape de cuisson vapeur réalisée lors de la génération de vapeur. L'étape de cuisson additionnelle est réalisée par le biais d'un ou de plusieurs moyens de cuisson additionnels. L'étape de cuisson additionnelle peut comprendre une étape de cuisson à air chaud et/ou une étape de cuisson sous pression et/ou une étape de cuisson par mijotage.

L'étape de cuisson vapeur peut être réalisée antérieurement à, simultanément avec, ou postérieurement à, l'étape de cuisson additionnelle. Les caractéristiques telles que la nature, la durée, ou le nombre, de l'étape de cuisson additionnelle, peuvent être déterminées de sorte à optimiser la cuisson des aliments reçus dans la cuve 2.

Par exemple, le procédé peut comprendre une étape de cuisson à air chaud seule, puis une étape de cuisson vapeur seule, puis une étape de cuisson à air chaud seule. Un tel procédé permet d'améliorer les performances organoleptiques de la cuisson de frites.

En variante, le procédé peut comprendre une étape combinée de cuisson à air chaud et de cuisson vapeur, la cuisson à air chaud et la cuisson vapeur étant réalisées simultanément. L'étape combinée de cuisson à air chaud et de cuisson vapeur peut par exemple être réalisée antérieurement à une étape de cuisson à air chaud seule.

Ainsi, une ou plusieurs étapes de cuisson peuvent être combinées ou réalisées successivement, afin d'optimiser la cuisson des aliments reçu dans la cuve 2. Le procédé de cuisson permet d'optimiser la cuisson des aliments.

Un exemple d'utilisation de l'appareil de cuisson par un utilisateur est décrit ci-dessous.

L'utilisateur soulève le couvercle 32 du châssis 3 pour le placer dans la position d'ouverture.

L'utilisateur met ensuite en place la cuve 2 sur le châssis 3, par exemple en empoignant la cuve 2 par la poignée 27. En particulier, l'utilisateur met en place la cuve 2 dans le renfoncement 33 du châssis 3 par une translation de la cuve 2 vers le bas dans la direction de l'axe de rotation R, de sorte que l'arbre de guidage 34 fasse saillie à travers l'orifice de mise en place de la cuve 2.

L'utilisateur monte ensuite la pale 1 dans la cuve 2, en particulier en clipsant la pale 1 sur l'arbre de guidage 34. En variante, l'utilisateur peut monter la pale 1 dans la cuve 2 puis mettre en place l'ensemble formé de la cuve 2 et de la pale 1 sur le châssis 3.

L'utilisateur introduit alors les aliments à cuire et le cas échéant le moyen de cuisson et/ou la matière grasse dans le volume de réception des aliments à cuire, par l'ouverture de la cuve 2. En variante, l'utilisateur peut disposer les aliments dans la cuve 2 avant de mettre en place la cuve 2 dans le châssis 3.

L'utilisateur place ensuite le couvercle 32 dans la position de fermeture.

L'utilisateur lance la cuisson des aliments via l'interface de commande disposée sur le châssis 3. L'utilisateur peut lancer, en plus de l'étape de préchauffage et de l'étape d'injection de vapeur, une ou plusieurs étape(s) de cuisson additionnelle(s), réalisée(s) simultanément ou successivement à l'étape de cuisson vapeur.

L'arbre de guidage 34 est alors entraîné en rotation par les moyens d'entraînement. L'arbre de guidage 34 peut être solidaire en rotation de la pale 1 et ainsi entraîner en rotation relative la pale 1 par rapport à la cuve 2 fixe.

Lors de l'étape de cuisson vapeur, de la vapeur est générée par le système de génération de vapeur et injectée à travers l'orifice d'injection de vapeur 23 de la cuve 2 et à travers l'orifice traversant 13 de la pale 1 vers les aliments à cuire.

A la fin de la cuisson, l'utilisateur place le couvercle 32 en position d'ouverture et retire la cuve 2 contenant les aliments cuits du châssis 3, par exemple par un mouvement opposé au mouvement de mise en place de la cuve 2 dans le châssis 3, en particulier par une translation de la cuve 2 vers le haut dans la direction de l'axe de rotation R. L'utilisateur peut alors consommer les aliments cuits.

L'enceinte de cuisson, l'appareil de cuisson et le procédé de cuisson décrits ci-dessus permettent de réaliser une cuisson vapeur efficace des aliments, le cas échéant combinée avec un ou plusieurs mode(s) de cuisson additionnel(s). Le procédé peut être adapté à tout type d'aliments, par exemple des morceaux de pommes de terre destinées à devenir des frites, des légumes ou des morceaux de légumes de diverse nature. Le procédé peut être mis en œuvre dans tout appareil de cuisson comprenant une pale de brassage 1.

## Revendications

1. Appareil de cuisson adapté pour réaliser une cuisson vapeur, l'appareil comprenant :
- une pale de brassage (1) destinée à être montée en rotation relativement à une cuve (2) de l'appareil de cuisson, la pale (1) comprenant un moyeu (11) et un bras (12), le moyeu (11) définissant un volume interne de moyeu (Vm) adapté pour être mis en communication fluidique avec un orifice d'injection de vapeur (23),
- une cuve (2) destinée à recevoir des aliments à cuire, la cuve (2) comprenant un fond (21), une paroi latérale (22), et une ouverture opposée au fond (21), la cuve (2) comprenant un orifice d'injection de vapeur (23) ménagé au travers de son fond (21) et propre à être relié fluidiquement à un système de génération de vapeur,
dans lequel la pale (1) est destinée à être montée de manière amovible dans la cuve (2) avec le volume interne de moyeu (Vm) de la pale (1) en communication fluidique avec l'orifice d'injection de vapeur (23) de la cuve (2),
**caractérisé en ce que** le bras (12) comprend une paroi de bras (12) définissant un volume interne de bras (Vb) en communication fluidique avec le volume interne de moyeu (Vm), dans lequel la paroi de bras (12) comprend au moins un orifice traversant (13) adapté pour autoriser un passage de vapeur,
et **en ce que** l'appareil de cuisson comprend en outre une pièce intermédiaire (24) amovible s'étendant sensiblement coaxialement à un axe de rotation (R) de la pale (1) relativement à la cuve (2), dans lequel la pièce intermédiaire (24) est destinée à être montée fixe dans le volume interne de moyeu (Vm) de la pale (1), la pièce intermédiaire (24) définit un volume interne de pièce intermédiaire adapté pour être relié fluidiquement avec l'orifice d'injection de vapeur (23), et dans lequel la pièce intermédiaire (24) comprend au moins une lumière traversante (241) adaptée pour autoriser un passage de vapeur depuis le volume interne de pièce intermédiaire (24) vers le volume interne de moyeu (Vm) de la pale (1), les lumières traversantes (241) étant des lumières traversantes (241) oblongues s'étendant sensiblement parallèlement à l'axe de rotation (R) de la pale (1) relativement à la cuve (2).

2. Appareil de cuisson selon la revendication 1, dans lequel la paroi de bras (12) de la pale de brassage (1) présente une face avant (121) et une face arrière (122) opposées par rapport à un sens de rotation de la pale (1), et dans lequel l'au moins un orifice traversant (13) est formé dans la face avant (121) de la paroi de bras (12) et/ou dans la face arrière (122) de la paroi de bras (12).

3. Appareil de cuisson selon l'une quelconque des revendications 1 ou 2, dans lequel la paroi de bras (12) de la pale de brassage (1) présente une face avant (121) et une face arrière (122) opposées par rapport à un sens de rotation de la pale (1), et dans lequel la paroi de bras (12) présente une forme sensiblement en V inversé, la face avant (121) et la face arrière (122) formant chacune une branche du V inversé.

4. Appareil de cuisson selon l'une quelconque des revendications 1 à 3, dans lequel la pale de brassage comprend plusieurs orifices traversants (13) répartis le long de la paroi de bras (12) radialement par rapport au moyeu (11), dans laquelle une surface totale des orifices traversants (13) en une position radiale donnée diminue lorsque la distance radiale par rapport au moyeu (11) augmente.

5. Appareil de cuisson selon l'une quelconque des revendications 1 à 4, dans lequel la paroi de bras (12) de la pale de brassage (1) présente une face avant (121) et une face arrière (122) opposées par rapport à un sens de rotation de la pale (1), et dans lequel la paroi de bras (12) présente en outre une face inférieure joignant la face avant (121) et la face arrière (122), la face inférieure étant destinée à venir en regard d'un fond (21) de la cuve (2) de l'appareil de cuisson.

6. Appareil de cuisson selon l'une quelconque des revendications 1 à 5, dans lequel l'au moins une lumière traversante (241) est ménagée radialement à la pièce intermédiaire (24).

7. Appareil de cuisson selon l'une quelconque des revendications 1 à 6, comprenant en outre un châssis (3) adapté pour recevoir la cuve (2), le châssis (3) comprenant un système de génération de vapeur, de sorte que lorsque la cuve (2) est reçue sur le châssis (3), alors le système de génération de vapeur est raccordé fluidiquement à l'orifice d'injection de vapeur (23).

8. Procédé de cuisson destiné à être mis en œuvre au moyen d'un appareil de cuisson selon la revendication 7, comprenant une étape de préchauffage de la cuve (2) jusqu'à une température prédéterminée, et une étape d'injection de vapeur par le système de génération de vapeur une fois la température prédéterminée atteinte ou dépassée.

## Patentansprüche

1. Kocheinrichtung, die angepasst ist zum Durchführen von Dampfkochen, wobei die Einrichtung umfasst:
- ein Rührblatt (1), das dazu bestimmt ist, relativ zu einem Behälter (2) der Kocheinrichtung drehbar montiert zu werden, wobei das Blatt (1) eine Nabe (11) und einen Arm (12) umfasst, wobei die Nabe (11) ein internes Volumen der Nabe (Vm) definiert, das angepasst ist, um mit einem Dampfinjektionsloch (23) in strömungstechnische Kommunikation gebracht zu werden,
- einen Behälter (2), der dazu bestimmt ist, zu kochende Lebensmittel aufzunehmen, wobei der Behälter (2) einen Boden (21), eine Seitenwand (22) und eine dem Boden (21) gegenüberliegende Öffnung umfasst, wobei der Behälter (2) ein Dampfinjektionsloch (23) umfasst, das durch seinen Boden (21) hindurch ausgebildet und geeignet ist, mit einem System zur Erzeugung von Dampf fluidisch verbunden zu werden, wobei das Blatt (1) dazu bestimmt ist, auf abnehmbare Weise mit dem internen Volumen (Vm) der Nabe des Blatts (1) in strömungstechnische Kommunikation mit dem Dampfinjektionsloch (23) des Behälters (2) in dem Behälter montiert zu werden,
**dadurch gekennzeichnet, dass** der Arm (12) eine Armwand (12) umfasst, die ein internes Volumen des Arms (Vb) in strömungstechnischer Kommunikation mit dem internen Volumen der Nabe (Vm) definiert, wobei die Armwand (12) mindestens ein Durchgangsloch (13) umfasst, das angepasst ist, um einen Durchgang von Dampf zuzulassen,
und dadurch, dass die Kocheinrichtung weiter umfasst
ein abnehmbares Zwischenstück (24), das sich relativ zu dem Behälter (2) im Wesentlichen koaxial zu einer Drehachse (R) des Blatts (1) erstreckt, wobei das Zwischenstück (24) dazu bestimmt ist, fest in dem internen Volumen der Nabe (Vm) des Blatts (1) montiert zu werden, wobei das Zwischenstück (24) ein internes Volumen des Zwischenstücks definiert, das angepasst ist, um fluidisch mit dem Dampfinjektionsloch (23) verbunden zu werden, und wobei das Zwischenstück (24) mindestens eine Durchgangsbohrung (241) umfasst, die angepasst ist, um einen Durchgang von Dampf ab dem internen Volumen des Zwischenstücks (24) in Richtung des internen Volumens (Vm) der Nabe des Blatts (1) zuzulassen, wobei die Durchgangsbohrungen (241) längliche Durchgangsbohrungen (241) sind, die sich relativ zu dem Behälter (2) im Wesentlichen parallel zur Drehachse (R) des Blatts (1) erstrecken.

2. Kocheinrichtung nach Anspruch 1, wobei die Armwand (12) des Rührblatts (1) eine vordere Fläche (121) und eine hintere Fläche (122) aufweist, die sich in Bezug auf eine Drehrichtung des Blatts (1) gegenüberliegen, und wobei das mindestens eine Durchgangsloch (13) in der vorderen Fläche (121) der Armwand (12) und/oder in der hinteren Fläche (122) der Armwand (12) gebildet ist.

3. Kocheinrichtung nach einem der Ansprüche 1 oder 2, wobei die Armwand (12) des Rührblatts (1) eine vordere Fläche (121) und eine hintere Fläche (122) aufweist, die sich in Bezug auf eine Drehrichtung des Blatts (1) gegenüberliegen, und wobei die Armwand (12) im Wesentlichen eine Form eines umgedrehten V aufweist, wobei die vordere Fläche (121) und die hintere Fläche (122) jeweils einen Schenkel des umgedrehten V bilden.

4. Kocheinrichtung nach einem der Ansprüche 1 bis 3, wobei das Rührblatt mehrere Durchgangslöcher (13) umfasst, die entlang der Armwand (12) in Bezug auf die Nabe (11) radial verteilt sind, wobei eine Gesamtoberfläche der Durchgangslöcher (13) in einer gegebenen radialen Position sich verringert, wenn die radiale Distanz in Bezug auf die Nabe (11) größer wird.

5. Kocheinrichtung nach einem der Ansprüche 1 bis 4, wobei die Armwand (12) des Rührblatts (1) eine vordere Fläche (121) und eine hintere Fläche (122) aufweist, die sich in Bezug auf eine Drehrichtung des Blatts (1) gegenüberliegen, und wobei die Armwand (12) weiter eine untere Fläche aufweist, die an die vordere Fläche (121) und die hintere Fläche (122) anschließt, wobei die untere Fläche dazu bestimmt ist, einem Boden (21) des Behälters (2) der Kocheinrichtung gegenüber zu kommen.

6. Kocheinrichtung nach einem der Ansprüche 1 bis 5, wobei die mindestens eine Durchgangsbohrung (241) radial in dem Zwischenstück (24) ausgebildet ist.

7. Kocheinrichtung nach einem der Ansprüche 1 bis 6, weiter umfassend einen Rahmen (3), der angepasst ist, um den Behälter (2) aufzunehmen, wobei der Rahmen (3) ein System zur Erzeugung von Dampf derart umfasst, dass, wenn der Behälter (2) auf dem Rahmen (3) aufgenommen wird, das System zur Erzeugung von Dampf dann fluidisch an das Dampfinjektionsloch (23) angeschlossen wird.

8. Kochverfahren, das dazu bestimmt ist, mittels einer Kocheinrichtung nach Anspruch 7 eingesetzt zu werden, umfassend einen Schritt des Vorwärmens des Behälters (2) auf eine vorbestimmte Temperatur und einen Schritt der Dampfinjektion durch das System zur Erzeugung von Dampf, sobald die vorbestimmte Temperatur erreicht oder überschritten wurde.

## Claims

1. Cooking appliance adapted for steaming, the appliance comprising:
- a stirring blade (1) intended to be rotatably mounted relative to a vessel (2) of the cooking appliance, the blade (1) comprising a hub (11) and an arm (12), the hub (11) defining a hub internal volume (Vm) adapted to be placed in fluid communication with a steam injection orifice (23),
- a vessel (2) intended to receive food to be cooked, the vessel (2) comprising a base (21), a side wall (22), and an opening opposite the base (21), the vessel (2) comprising a steam injection orifice (23) arranged through its base (21) and suitable for fluid connection to a steam generation system, wherein the blade (1) is intended to be removably mounted in the vessel (2) with the hub internal volume (Vm) of the blade (1) in fluid communication with the steam injection orifice (23) of the vessel (2),
**characterized in that** the arm (12) comprises an arm wall (12) defining an arm internal volume (Vb) in fluid communication with the hub internal volume (Vm), wherein the arm wall (12) comprises at least one through hole (13) adapted to allow steam to pass,
and **in that** the cooking appliance also comprises
a removable intermediate piece (24) extending substantially coaxially to an axis of rotation (R) of the blade (1) relative to the vessel (2), wherein the intermediate piece (24) is intended to be fixedly mounted in the hub internal volume (Vm) of the blade (1), the intermediate piece (24) defines an internal volume of the intermediate piece adapted to be fluidly connected to the steam injection orifice (23), and wherein the intermediate piece (24) comprises at least one through light (241) adapted to allow steam to pass from the internal volume of the intermediate piece (24) to the hub internal volume (Vm) of the blade (1), the through lights (241) being oblong through lights (241) extending substantially parallel to the axis of rotation (R) of the blade (1) relative to the vessel (2).

2. Cooking appliance according to claim 1, wherein the arm wall (12) of the stirring blade (1) has a front face (121) and a rear face (122) opposite a direction of rotation of the blade (1), and wherein the at least one through hole (13) is formed in the front face (121) of the arm wall (12) and/or in the rear face (122) of the arm wall (12).

3. Cooking appliance according to any one of claims 1 or 2, wherein the arm wall (12) of the stirring blade (1) has a front face (121) and a rear face (122) opposite a direction of rotation of the blade (1), and wherein the arm wall (12) has a substantially inverted V-shape, the front face (121) and the rear face (122) each forming a branch of the inverted V.

4. Cooking appliance according to any one of claims 1 to 3, wherein the stirring blade comprises a plurality of through holes (13) distributed radially along the arm wall (12) relative to the hub (11), wherein a total area of the through holes (13) in a given radial position decreases as the radial distance from the hub (11) increases.

5. Cooking appliance according to any one of claims 1 to 4, wherein the arm wall (12) of the stirring blade (1) has a front face (121) and a rear face (122) opposite a direction of rotation of the blade (1), and wherein the arm wall (12) also has a lower face joining the front face (121) and the rear face (122), the lower face being intended to be facing a base (21) of the vessel (2) of the cooking appliance.

6. Cooking appliance according to any one of claims 1 to 5, wherein the at least one through light (241) is arranged radially to the intermediate piece (24).

7. Cooking appliance according to any one of claims 1 to 6, also comprising a frame (3) adapted to hold the vessel (2), the frame (3) comprising a steam generation system, such that when the vessel (2) is held on the frame (3), the steam generation system is fluidly connected to the steam injection orifice (23).

8. Cooking method intended for use by means of a cooking appliance according to claim 7, comprising a step of preheating the vessel (2) to a predetermined temperature, and a step of injecting steam by the steam generation system once the predetermined temperature is reached or exceeded.
